# FASCICULE DE BREVET EUROPEEN

(11) **EP 1 357 724 B1**
(45) Date de publication et mention de la délivrance du brevet: **02.03.2011**
(21) Numéro de dépôt: 03290980.6
(22) Date de dépôt: 22.04.2003
(51) Int. Cl.: H04L 29/06

(54) **Dispositif de gestion de filtres de données**
Datenfilterungsverwaltungsvorrichtung
Data filtering management device

(30) Priorité: 23.04.2002 FR 0205091
(43) Date de publication de la demande: 29.10.2003
(73) Titulaire: Alcatel Lucent, 75008 Paris (FR)
(72) Inventeur: Offredo, Gaétan, 67400 Illkirch Graffenstaden (FR); Pennerath, Frédéric, 67400 Illkirch (FR)
(74) Mandataire: Sciaux, Edmond

(56) Documents cités:
- EP-A- 0 856 974
- EP-A- 0 909 075

## Description

L'invention concerne le domaine du traitement de données, et plus particulièrement celui du filtrage de données au niveau d'un point d'un réseau public ou privé raccordé à un autre réseau public ou privé ou raccordé à des terminaux d'utilisateurs.

Le filtrage de données est généralement assuré par des serveurs informatiques équipés d'un dispositif de traitement de type pare-feu (plus connu sous le nom anglais « firewall »). Un pare-feu est habituellement destiné à assurer la protection de réseaux privés (ou internes), de type LAN, ou de terminaux d'utilisateurs isolés contre les attaques ou intrusions extérieures provenant généralement d'un réseau public (ou externe), de type WAN, tel qu'Internet. Il peut également servir à limiter l'accès d'utilisateurs d'un réseau privé à un réseau public, et/ou protéger le serveur à l'égard des deux réseaux, interne et externe.

Pour assurer l'une au moins des fonctions précitées, ou en d'autres termes pour pouvoir filtrer les paquets de données reçus par le serveur dans lequel il est implanté, le pare-feu doit être configuré. Pour ce faire, on utilise généralement des règles primaires (ou élémentaires) définissant des filtres. La configuration du pare-feu a donc pour objet de lui faire appliquer une suite ordonnée (au sens mathématique du terme) de filtres actifs. A réception d'un paquet de données, on confronte les caractéristiques du paquet à celles des filtres de la suite ordonnée, de sorte que seuls poursuivent leur chemin les paquets présentant des caractéristiques compatibles avec celles des filtres.

Documents EP 0 909 075 et EP 0 856 974 montrent un tel pare-feu.

La configuration d'un pare-feu est une opération délicate effectuée manuellement par l'administrateur du réseau auquel il appartient. Du fait de cette intervention manuelle, statique, la configuration peut être fonctionnellement correcte mais inadaptée ou non optimale. Elle peut même s'avérer erronée. Dans tous les cas, cela ce traduit généralement par une dégradation des performances du serveur.

Les réseaux évoluant fréquemment, les pare-feux doivent être régulièrement reconfigurés, ce qui non seulement multiplie les risques d'erreur ou d'inadaptation, mais également entraîne une perte de temps importante pour l'administrateur du réseau.

L'invention a donc pour but de résoudre tout ou partie des inconvénients précités, en proposant un dispositif de gestion des filtres de pare-feu prenant en compte, en temps réel, tant les modifications et évolutions du paramétrage du réseau ou des services offerts par le réseau, que les événements non prévisibles.

Elle propose à cet effet un dispositif de traitement de données, destiné à être implanté dans un serveur informatique pouvant recevoir des données primaires (ou paquets de données) et transmettre ces données primaires après application, par des moyens de contrôle (de type pare-feu), de traitements spécifiques reposant sur des règles primaires.

Ce dispositif se caractérise par le fait qu'il comprend i) une première table dans laquelle sont stockées les « définitions/prototypes » d'ensembles de règles primaires (dits « méta-règles primaires »), sous une forme paramétrable, en correspondance d'identifiants primaires, (chaque ensemble ou méta-règle primaire comprenant au moins une règle primaire), et ii) des moyens de gestion destinés à être couplés aux moyens de contrôle et capables de sélectionner dans la première table certains identifiants primaires et, à réception de données auxiliaires représentatives de paramètres de fonctionnement, délivrées par les moyens de contrôle consécutivement à la réception de données secondaires par le serveur, pour sélectionner dans la première table l'un au moins des identifiants primaires et lui associer les données auxiliaires reçues, de manière à (re)définir les traitements spécifiques.

On entend ici par « données auxiliaires » des données (ou valeurs) qui doivent être attribuées à des paramètres de fonctionnement des règles primaires d'une méta-règle que l'on souhaite mettre en oeuvre dans des moyens de contrôle, tels qu'un pare-feu, consécutivement à la réception de données secondaires par le serveur. Par ailleurs, on entend ici par « données secondaires » toute information, reçue par le serveur (ou ses moyens de contrôle), dont le contenu est interprété comme un besoin de reconfiguration des moyens de contrôle. Il pourra s'agir de données (ou champs) contenues dans des paquets de données primaires ou d'événements survenus dans un réseau, comme par exemple l'ajout d'une carte.

De la sorte, les moyens de gestion peuvent reconfigurer, de façon dynamique et sans intervention humaine, les moyens de contrôle chaque fois que cela s'avère nécessaire, à partir des méta-règles primaires définies et stockées dans la première table et des informations (données auxiliaires) fournies par le serveur.

Selon une autre caractéristique de l'invention, le dispositif peut comprendre une seconde table, accessible aux moyens de gestion (et de préférence incorporée dans ceux-ci, tout comme la première table), dans laquelle sont stockés des identifiants secondaires en correspondance, chacun, d'au moins un identifiant primaire sélectionné (ou activé) associé à des données auxiliaires (c'est-à-dire ceux qui désignent des méta-règles mises en oeuvre dans les moyens de contrôle avec des paramètres de fonctionnement représentés par les données auxiliaires). Dans ce cas, il est avantageux que les moyens de gestion puissent, à réception des données auxiliaires, déterminer s'il leur correspond déjà dans la seconde table des identifiants secondaires sélectionnés, de manière à leur associer de nouvelles données auxiliaires destinées à adapter les traitements spécifiques. Cela permet de ne modifier que la partie de la configuration qui doit l'être et non l'intégralité de celle-ci.

Certaines méta-règles primaires sélectionnées peuvent être regroupées dans la seconde table en méta-règles secondaires également représentées par des identifiants secondaires, associés à des données auxiliaires.

Un identifiant secondaire peut être identique, ou non, à un identifiant primaire. Par exemple, une méta-règle primaire pourra posséder le même identifiant (primaire) dans les première et seconde tables si elle n'est mise en oeuvre que sous un unique paramétrage (ou jeu de données auxiliaires) dans le pare-feu. En revanche, une méta-règle primaire devra porter un identifiant secondaire différent de son identifiant primaire lorsqu'elle est mise en oeuvre sous plusieurs paramétrages différents dans le pare-feu.

Ces méta-règles (primaires) et « super » méta-règles (secondaires) permettent de réduire encore plus les temps de (re)configuration.

Préférentiellement, les moyens de gestion comprennent une multiplicité de sous-modules de gestion destinés chacun à gérer l'association de données auxiliaires à une ou plusieurs méta-règles primaires ou secondaires (l'important étant que les sous-modules opèrent une partition des méta-règles primaires ou secondaires dont ils sont responsables), et sont agencés, à réception des données auxiliaires, pour déterminer parmi les sous-modules de gestion celui qui leur correspond. Cela facilite l'opération de reconfiguration et permet également d'en réduire la durée.

Par ailleurs, les moyens de gestion peuvent être agencés, à réception de certaines données auxiliaires, pour supprimer de la seconde table l'un au moins des identifiants secondaires stockées (cela revient à désélectionner ou désactiver une méta-règle primaire ou secondaire au niveau des moyens de contrôle). Ils peuvent être également agencés, à réception de données complémentaires communiquées par le serveur, pour ajouter, supprimer ou modifier dans la seconde table des méta-règles primaires ou secondaires ou des données auxiliaires associées aux méta-règles primaires ou secondaires.

En outre, les moyens de gestion et les tables font préférentiellement partie d'un « méta » pare-feu gérant un pare-feu équipant le serveur et comportant les moyens de contrôle.

L'invention concerne en outre un pare-feu équipé d'un dispositif du type de celui présenté ci-avant.

L'invention concerne également un procédé de traitement dynamique de données consistant à appliquer à des données primaires reçues par un serveur informatique, des traitements spécifiques à partir de règles primaires, de sorte que les données primaires reçues soient traitées avant d'être transmises par ledit serveur.

Ce procédé se caractérise par le fait qu'il comprend une étape préliminaire dans laquelle on stocke dans une première table des ensembles de règles primaires (ou méta-règles d'au moins une règle primaire), sous une forme paramétrable, en correspondance d'identifiants primaires, puis on sélectionne dans la première table certains identifiants primaires et, à réception de données auxiliaires représentatives de paramètres de fonctionnement, délivrées par le serveur consécutivement à la réception de données secondaires, on sélectionne dans la première table l'un au moins des identifiants primaires et on associe à cet identifiant primaire les données auxiliaires, de manière à définir les traitements spécifiques.

Selon une autre caractéristique de l'invention, lors de l'étape préliminaire on stocke dans une seconde table des identifiants secondaires en correspondance, chacun, d'au moins un identifiant primaire sélectionné associé à des données auxiliaires.

Certaines méta-règles primaires peuvent être regroupées dans la seconde table en méta-règles secondaires représentées par des identifiants secondaires.

Selon une autre caractéristique de l'invention, on peut paralléliser, d'une part, la sélection dans la première table des méta-règles primaires, et d'autre part, la modification dans la seconde table des données secondaires associées à l'identifiant secondaire représentatif des méta-règles primaires ou secondaires sélectionnées.

Par ailleurs, le procédé peut permettre, à réception de certaines données auxiliaires, la suppression de l'une au moins des méta-règles primaires ou secondaires stockées dans la seconde table. De même, le procédé peut permettre, à réception de données complémentaires communiquées par le serveur, l'ajout, la suppression ou la modification dans la seconde table de méta-règles primaires ou secondaires.

Le dispositif et le procédé selon l'invention sont tout particulièrement adaptés, bien que de façon non exclusive, au filtrage de données dans les réseaux de télécommunications publics et privés.

D'autres caractéristiques et avantages de l'invention apparaîtront à l'examen de la description détaillée ci-après, et des dessins annexés, sur lesquels :
- la figure 1 illustre de façon très schématique un serveur raccordé à deux réseaux privé et public et équipé d'un dispositif selon l'invention,
- la figure 2 est un diagramme bloc détaillant de façon schématique un exemple de réalisation d'un dispositif selon l'invention.

Les dessins annexés sont, pour l'essentiel, de caractère certain. En conséquence, ils pourront non seulement servir à compléter l'invention, mais aussi contribuer à sa définition, le cas échéant.

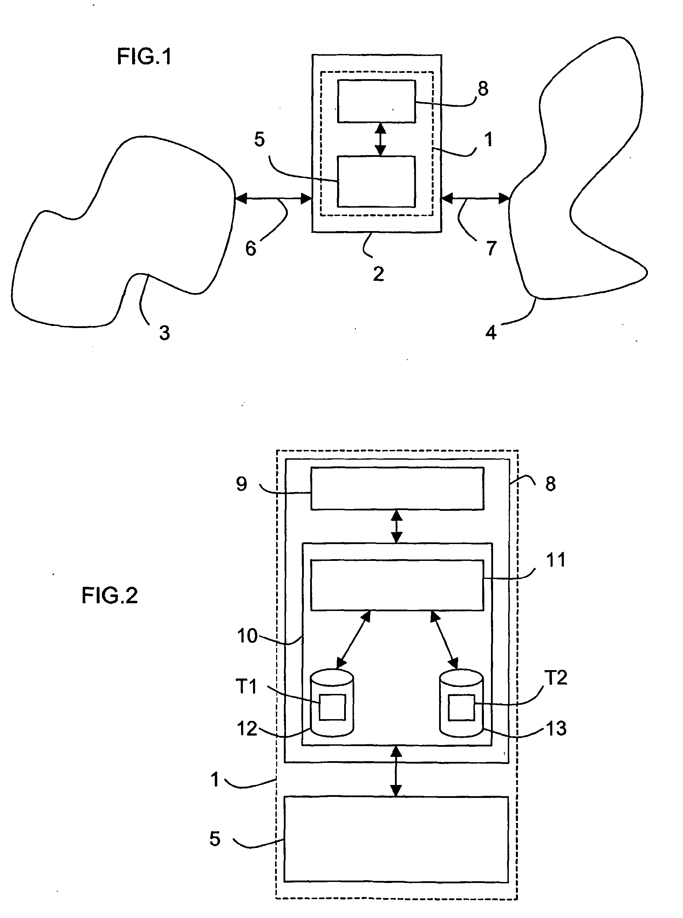

Dans la description qui suit, comme illustré sur la figure 1, il sera fait référence à un dispositif de traitement de données 1 implanté dans un serveur informatique 2, installé à un noeud (ou point) de liaison entre un réseau public (ou externe) 3 et un réseau privé (ou interne) 4. Mais, le serveur pourrait être implanté en de nombreux autres endroits, comme par exemple chez un prestataire de services, ou chez un câblo-opérateur.

Le réseau public 3 est, par exemple, le réseau Internet, et le réseau privé 4 est, par exemple, un réseau local de type LAN (pour « Local Area Network ») raccordé à une multiplicité de terminaux d'utilisateurs.

Bien entendu, le dispositif 1 pourrait être implanté dans un boîtier externe, de type équipement auxiliaire, raccordé au serveur 2, celui-ci étant alors directement raccordé au réseau externe (Internet).

Dans l'exemple illustré, le serveur est de type « routeur », dans la mesure où les paquets de données (primaires) entrants et sortants sont sensiblement identiques. Ce serveur 2 est par exemple destiné à l'échange de données vocales. Il est par exemple équipé de plusieurs cartes électroniques qui communiquent sur le réseau interne 4. L'une de ces cartes permet l'accès au réseau externe 3 (ici Internet). Elle comporte donc des interfaces WAN (ADSL, ISDN, Ethernet). Chaque carte possède ses propres privilèges, notamment en matière de type de trafic qu'elle peut générer sur le réseau interne 4, compte tenu des autres matériels informatiques de ce réseau interne.

De préférence, le serveur 2 héberge également des services configurables ou paramétrables, comme par exemple un module de courrier électronique, un module Intranet, un module de réseau privé virtuel (plus connu sous l'acronyme anglais VPN (pour « Virtual Private Network »), et analogue.

Le serveur 2 est également équipé d'un pare-feu (ou « firewall ») 5 destiné principalement, comme cela est bien connu de l'homme de l'art, à filtrer les paquets de données primaires reçus, soit du réseau externe 3, via l'interface d'entrée/sortie 6, soit du réseau interne 4, via l'interface d'entrée/sortie 7.

Le pare-feu (ou coupe-feu) 5 permet ainsi de protéger les terminaux d'utilisateurs Ti, ou ici le réseau privé 4, des agressions et attaques provenant du réseau extérieur 3.

Tout type de filtrage peut être envisagé, dès lors qu'il repose sur l'application de règles élémentaires (ou primaires) paramétrables aux paquets de données primaires reçus par le serveur 2. Il peut être généralisé à l'ensemble d'un réseau, ou à des sous-parties d'un réseau, ou encore adapté à chaque utilisateur. Dans ce dernier cas, le filtrage porte également sur l'authentification de l'utilisateur.

Bien entendu, le pare-feu peut être configuré de manière à assurer d'autres fonctions que le filtrage. Il peut notamment enregistrer certaines informations échangées entre les terminaux d'utilisateurs et le réseau externe. Généralement, il s'agit de sauvegarder dans une mémoire, adaptée à cet effet les coordonnées des connexions précédemment acceptées (adresse de l'utilisateur, adresses (par exemple URL) des pages consultées sur les différents sites, date et heure de la consultation). Il peut également être configuré de manière à faire remonter l'analyse des paquets de données dans les couches supérieures du modèle OSI du pare-feu, par exemple de sorte que ledit pare-feu décide du rejet ou de l'acceptation d'un paquet en fonction d'éléments appartenant à sa couche applicative. Il peut en outre être configuré de manière à garder une trace de certains paquets échangés (mode « LOG ») et/ou à modifier le contenu de certains paquets (mode « NAT », pour Network Adress Translation - par exemple pour le masquage des adresses IP du réseau interne). Il peut également être configuré pour assurer la détection de virus.

Dans l'exemple illustré, le pare-feu 5 constitue une partie du dispositif selon l'invention 1. Mais, dans une variante, le dispositif 1 pourrait être simplement couplé à un pare-feu « natif », afin de gérer et contrôler dynamiquement sa configuration.

On se réfère maintenant à la figure 2 pour décrire en détail un exemple de dispositif de traitement (1) selon l'invention.

Comme indiqué précédemment, dans cet exemple le dispositif 1 comporte, tout d'abord, un module de contrôle constituant le pare-feu (ou firewall) 5. Ce pare-feu étant sensiblement identique aux pare-feux traditionnels (ou natifs), il ne sera donc pas décrit en détail. Sa structure en couche, notamment, sera ignorée dans ce qui suit, dans la mesure où elle est parfaitement connue de l'homme de l'art.

Le module pare-feu 5 est destiné à recevoir du serveur 2 les paquets de données primaires, reçus par l'une de ses interfaces d'entrée/sortie 6 et 7, afin de leur appliquer des traitements spécifiques (ou filtrages) définis à partir de règles élémentaires (ou primaires) paramétrables.

Plus précisément, le module pare-feu 5 fait initialement l'objet d'une configuration reposant sur l'implantation d'une suite ordonnée de règles primaires paramétrables définissant des filtres actifs, de sorte que lesdits filtres puissent être appliqués aux paquets, séquentiellement et de façon ordonnée en fonction de leurs caractéristiques propres, telles que les adresses sources et de destination, les interfaces réseaux d'entrée et de sortie, les protocoles d'échange au dessus d'IP, tels que TCP, UDP ou ICMP (par exemple dans le cas d'Internet), ou encore en fonction de paramètres propres au protocole d'échange, tels que les ports source et de destination dans le cas de TCP et UDP, ou le type de paquet dans le cas d'ICMP.

Généralement, la configuration d'un pare-feu doit interdire tout trafic par défaut et les filtres actifs ne doivent autoriser que certains sous ensembles de trafic qui doivent l'être. Par exemple un routeur connectant un réseau interne à Internet peut mettre en oeuvre les règles simplifiées suivantes :
- accepter des paquets relatifs à un paquet précédemment accepté ;
- accepter les paquets venant du réseau interne (LAN) et allant vers Internet, par exemple lorsqu'ils sont de type HTTP ou HTTPS (TCP/80 et TCP/443) ;
- accepter les paquets venant du LAN à direction du routeur, par exemple lorsqu'ils sont de type DNS (UDP/53) ou Echo Request (ICMP, type echo request) ;
- accepter les paquets relatifs au serveur de messagerie situé sur le LAN d'une l'entreprise et d'adresse spécifiée « *@* », par exemple les paquets SMTP (TCP/25) venant d'Internet et allant vers le LAN à l'adresse *@*, ou les paquets SMTP et POP3 (TCP/25 et TCP/110) venant de l'adresse *@* et allant vers Internet.

En fonction des résultats du filtrage, le module pare-feu 5 délivre au serveur 2 soit les données primaires traitées, c'est-à-dire filtrées et éventuellement complétées et/ou modifiées, soit un message de rejet des données primaires reçues. Bien entendu, les données primaires peuvent aussi ne faire que traverser le serveur après leur acceptation par le module pare-feu 5.

Le dispositif 1 comprend un module de gestion 8 pour optimiser la suite ordonnée de règles élémentaires définissant la configuration du serveur, mais surtout pour permettre qu'il soit reconfiguré dynamiquement, de façon optimale, chaque fois que le serveur 2 (ou son module pare-feu 5) reçoit des données secondaires correspondant, par exemple, à une modification sur le réseau interne 4, ou à un événement imprévu sur le réseau interne 4 ou externe 3, tout en lui assurant un haut niveau de sécurité.

Plus précisément, le module de gestion 8 est destiné à adapter, de façon dynamique, la configuration du module pare-feu 5, d'une première part, aux caractéristiques physiques (ou matérielles) du serveur 2, comme par exemple le nombre de cartes électroniques qu'il contient, le type de ces cartes, ou la topologie du réseau interne 4, d'une deuxième part, à la configuration de fonctionnement du serveur, par exemple pour qu'il puisse assurer certains services internes et/ou externes, paramétrables, et par conséquent évolutifs, avec d'éventuelles restrictions spécifiques pour certains terminaux et/ou sur la présence d'une licence d'utilisation, et d'une troisième part, à l'apparition d'événements imprévus internes et/ou externes, tels que des attaques non répertoriées, ou des attaques répertoriées, telles que par exemple des tentatives de connexion sur des services hébergées (http, VPN, telnet), des tentatives de sondage de port (« port scanning »), des modifications de trafic sur les interfaces LAN / WAN, telles que des connexions/déconnexions à un service ou site Internet, des liens avec des terminaux distants, ou des apparitions/disparitions de tunnels sécurisés (ou cryptés) associés à un procédé d'authentification, ou encore des stimuli générés lors de l'exécution de tâches par les services ou par une carte.

Pour remplir les fonctions précitées, le module de gestion 8 comporte un premier module de configuration 9 couplé à un second module de « liaison » 10, également appelé « méta-pare-feu » et couplé au module pare-feu 5.

Lorsque le serveur 2 reçoit des données secondaires relatives à des modifications de caractéristiques physiques (ou matérielles), à des (modifications de) paramètres de service, ou à des informations « contextuelles » (stimuli), il génère des données auxiliaires (ou complémentaires) à destination du module de gestion 8, pour lui demander de (re)configurer son module pare-feu 5. A réception de ces données auxiliaires, le module de gestion 8 les communique à son premier module de configuration 9.

Le module de configuration 9 est un organe de décision qui décide de l'opportunité d'apporter des modifications à la configuration en cours du module pare-feu 5, tandis que le méta pare-feu 10 est chargé de sa mise en oeuvre pratique.

Le méta pare-feu 10 comporte un sous-module d'interface 11 (ou « moteur »), couplé au module pare-feu 5 et à au moins une première mémoire 12 dans laquelle est stockée une première table T1 de correspondance entre des données définissant des règles élémentaires (ou primaires) paramétrables et des identifiants primaires.

Plus précisément, on stocke dans la première table des définitions/prototypes d'ensembles (ou classes) de règles élémentaires (ou primaires), appelés méta-règles (primaires). Chaque méta-règle est dédiée à une catégorie de filtrage choisie. Chaque ensemble ou classe (ou méta-règle primaire) comprend au moins une règle élémentaire ou primaire, mais généralement, il faut plusieurs règles élémentaires pour définir un filtrage.

Un identifiant primaire est associé à chaque classe de règles ou méta-règle primaire. Les méta-règles possèdent donc chacune une définition (ou un prototype) stockée dans la première table T1. Ces définitions sont préférentiellement produites à l'aide d'un outil de compilation, dans la phase de conception du dispositif, compte tenu du module pare-feu 5 et de son utilisation. En fait, l'outil de compilation produit des méta-règles dont le contenu est conforme au module pare-feu 5 (ou qui peuvent se traduire par des règles primaires équivalentes et compréhensibles par le module pare-feu 5).

Le premier module de configuration 9 connaît la liste des identifiants primaires des méta-règles, et le type de données auxiliaires auxquels ils correspondent. Par conséquent, à réception de données auxiliaires (indiquant par exemple qu'une nouvelle connexion IP, de type ISDN, a été requise par un terminal du réseau interne 4), le premier module de configuration 9 peut en déduire, d'une part, leur(s) type(s) et par conséquent la ou les méta-règles qu'il doit associer à ces données auxiliaires pour que le module pare-feu 5 puisse être (re)configuré. Il fournit alors au moteur 11 du méta pare-feu 10 le ou les identifiants primaires et les données auxiliaires (ou valeurs de paramètres) associées.

Dans un premier exemple de réalisation, à réception des identifiant(s) primaire(s) et données auxiliaires (ou valeurs de paramètres), le moteur 11 extrait de la première table T1 la définition associée et attribue aux paramètres des méta-règles primaires désignées les valeurs (ou données auxiliaires) reçues. Il génère ainsi une ou plusieurs nouvelles méta-règles primaires qu'il transmet au module pare-feu 5, pour qu'elle(s) se substitue(nt) à celle(s) qui étai(en)t devenues inadaptée(s), ou pour qu'elles les complètent.

Ce mode de réalisation permet de ne modifier que la partie de la configuration du module pare-feu 5 qui est concernée par les données auxiliaires fournies par le serveur 2. Ce mode de réalisation est avantageux lorsque le module pare-feu 5 peut fournir ses paramètres de configuration de façon simple et rapide. Dans ce cas, le moteur 11 peut en effet savoir quelle est la configuration en cours dans le module pare-feu 5 et ne procéder qu'à la modification des paramètres ayant évolué. En revanche, ce premier mode de réalisation peut ne pas être optimal, lorsque le module pare-feu 5 n'est pas conçu pour fournir ses paramètres de configuration ou ne peut le faire de façon simple et rapide. En effet, puisque l'on ne connaît pas la méta-règle primaire qui est activée dans le module pare-feu 5, il faut recalculer intégralement toutes ses règles avec les valeurs de paramètres fournies, ce qui peut s'avérer assez long lorsque cette classe comprend de nombreuses règles élémentaires. Cela peut aussi s'avérer difficile voire impossible, notamment dans le cas d'événements aléatoires, car cela suppose la sauvegarde de toutes les données caractéristiques de tous les événements et le paramétrage des règles primaires du module pare-feu 5, ce qui reviendrait à déporter la table T2, dont il est question ci-après, à un niveau amont du traitement.

Le dispositif selon l'invention peut donc se décliner sous une forme légèrement différente, illustrée sur la figure 2. Dans ce second exemple de réalisation, le méta pare-feu 10 comprend une seconde mémoire 13, couplée au moteur 11 et dans laquelle se trouve stockée une seconde table T2 de correspondance entre des identifiants secondaires et des identifiants primaires, qui désignent des méta-règles primaires dites « activées » (ou sélectionnées) du fait qu'elles participent à la configuration en cours du module pare-feu 5, associées à des données auxiliaires définissant les valeurs en cours des paramètres des méta-règles participant à cette configuration. En d'autres termes, la configuration en cours du module pare-feu 5 est stockée dans la seconde mémoire 13.

Certains identifiant secondaires peuvent être identiques à certains identifiants primaires, par exemple lorsqu'une méta-règle primaire n'est mise en oeuvre que sous un unique paramétrage (ou jeu de données auxiliaires) dans le module pare-feu 5. En revanche, un identifiant secondaire est différent d'un identifiant primaire dès lors que la méta-règle primaire correspondante est mise en oeuvre sous plusieurs paramétrages différents dans le module pare-feu 5.

Préférentiellement, le premier module de configuration 9 connaît la liste des identifiants secondaires et le type de données auxiliaires auxquels ils correspondent. Par conséquent, à réception des identifiant(s) secondaire(s) et valeurs fournis par le premier module de configuration 9, le moteur 11 inspecte tout d'abord la seconde table T2 de manière à déterminer si le ou lesdits identifiants secondaires s'y trouvent stockés en correspondance de données auxiliaires (ou valeurs), éventuellement différentes de celles reçues.

Si tel n'est pas le cas, il procède comme dans le premier mode de réalisation. Il extrait donc de la première table T1 la définition de la méta-règle associée à l'identifiant secondaire ou primaire reçu et attribue aux paramètres de cette méta-règle les valeurs (ou données auxiliaires) reçues. Il peut également prendre la décision d'effacer des méta-règles de la seconde table T2. Dans ce cas il reconstruit au préalable l'ensemble des règles primaires associées aux anciennes données auxiliaires et les efface du module pare-feu 5. La modification d'une méta-règle suppose aussi l'effacement préalable de son ancienne version lorsque le module pare-feu 5 ne propose pas de moyens simples pour identifier les règles primaires activées (ce que l'on peut supposer puisque le méta pare-feu permet d'apporter un moyen simple d'identification des méta-règles à l'aide d'un identifiant secondaire).

Il génère ainsi une classe de nouvelles règles élémentaires qu'il transmet au module pare-feu 5, pour qu'elle se substitue à celle qui était devenue inadaptée, ou pour qu'elle complète les méta-règles déjà activées. Puis, il stocke dans la seconde table T2 l'identifiant secondaire de la méta-règle et les données auxiliaires associées, puisqu'elles définissent désormais une partie de la configuration en cours.

En revanche, si l'identifiant primaire ou secondaire est présent dans la seconde table T2, il extrait les données auxiliaires associées à cet identifiant primaire et ne remplace que celles qui doivent être changées. Bien entendu, il peut également rajouter des données auxiliaires (ou valeurs) si de nouveaux paramètres ont été introduits par le premier module de configuration 9. Il transmet ensuite au module pare-feu 5 la ou les méta-règles modifiées, ou la ou les nouvelles méta-règles paramétrées, pour qu'elles se substituent à celles devenues inadaptées, ou viennent les compléter. Puis, il stocke dans la seconde table T2 les nouvelles données auxiliaires en correspondance de l'identifiant secondaire et de l'identifiant primaire associés, puisqu'elles définissent désormais une partie de la configuration en cours.

Afin d'accélérer encore plus les traitements de reconfiguration, on peut également constituer dans la seconde table T2 des classes de classes (ou classes de méta-règles primaires) constituant des méta-règles secondaires. Dans ce cas, on associe ces méta-règles secondaires à des identifiants secondaires qui sont également stockés dans la seconde table T2 en correspondance des identifiants primaires et données auxiliaires associés, lorsque ces méta-règles secondaires sont activées (ou sélectionnées) avec lesdites données auxiliaires.

On peut également instaurer dans les tables de correspondance des niveaux de priorité entre règles d'une méta-règle primaire, ou entre méta-règles primaires d'une méta-règle secondaire, ou encore entre méta-règles primaires ou secondaires.

De préférence, le moteur 11 est agencé pour supprimer de la seconde table T2, sur ordre du premier module de configuration 9, des identifiants secondaires associés à des méta-règles primaires qui ne sont plus actives dans le module pare-feu 5. Egalement de préférence, le moteur 11 est agencé pour ajouter ou modifier dans la seconde table T2, sur ordre du premier module de configuration 9, des identifiants secondaires associés à de nouvelles méta-règles primaires ou secondaires, ou bien ajouter ou supprimer d'une méta-règle secondaire une ou plusieurs méta-règles primaires. Il peut également être agencé pour fusionner au sein d'une même méta-règle secondaire, sur ordre, des méta-règles primaires ou secondaires appartenant à au moins deux méta-règles primaires ou secondaires différentes, ou bien scinder une méta-règle primaire ou secondaire, sur ordre, en au moins deux méta-règles primaires ou secondaires, de manière à créer de nouvelles définitions de filtres.

Les ordres transmis par le premier module de configuration 11 résultent de préférence d'instructions (ou données complémentaires) reçues du serveur 2.

Deux exemples de sauvegarde de données dans la seconde table T2 vont maintenant être décrits à titre illustratif. Comme indiqué précédemment, la première table T1 comporte des définitions ou prototypes de méta-règles primaires en correspondance d'identifiants primaires. Par exemple, l'identifiant primaire « Email » désigne l'ensemble (ou jeu) de trois prototypes de règles primaires :
- Règle 1: Flow=FromLanToWan Source=$1 Protocol=tcp DestinationPort=smtp Action=ACCEPT
- Règle 2: Flow=FromLanToWan Source=$1 Protocol=tcp DestinationPort=pop3 Action=ACCEPT
- Règle 3: Flow=FromWanToLan Destination=$1 Protocol=tcp DestinationPort= smtp Action=ACCEPT

Cette méta-règle Email permet l'échange de courrier électronique entre un serveur de courrier électronique sur le réseau interne (LAN) et le serveur de l'ISP sur Internet. Elle ne comporte qu'un seul paramètre « $1 » (ou donnée auxiliaire) qui correspond à l'adresse IP du serveur de courrier électronique sur le LAN.

Ce paramètre est transmis par l'intermédiaire d'une syntaxe particulière aux trois prototypes de règles primaires.

Les autres paramètres (« Protocol=tcp, DestinationPort=smtp » ou « FromLanToWan »), caractérisant les règles primaires, sont définis de manière statique dans l'entrée de la première table.

Lorsque l'on veut activer la méta-règle primaire Email avec une adresse de serveur 10.0.0.1 (ou donnée auxiliaire), on sauvegarde dans la seconde table T2 l'identifiant primaire Email associé à l'adresse 10.0.0.1, en correspondance d'un identifiant secondaire qui peut être également, dans cet exemple, Email. Dans la seconde table T2 cela peut s'exprimer sous la forme : « Email -> Email 10.0.0.1 ».

Cette sauvegarde peut être obtenue à l'aide d'une commande du type « metafirewall add Email 10.0.0.1 ».

Si l'on doit ultérieurement modifier l'adresse du serveur ou supprimer la méta-règle Email, on lancera respectivement les commandes « metafirewall add Email 20.0.0.1 » et « metafirewall delete Email ».

Si, l'installation évolue, par exemple du fait qu'elle dispose d'un second serveur de courrier électronique d'adresse « 10.0.0.2 », et que l'on veut gérer les deux serveurs à l'aide d'une unique méta-règle secondaire, on peut associer à celle-ci l'identifiant secondaire « Serveur ».

Pour sauvegarder dans la seconde table T2 cet identifiant secondaire désignant une méta-règle secondaire, et les données auxiliaires associées, on lance les commandes « metafirewall addin Serveur Email 10.0.0.1 » et « metafirewall appendin Serveur Email 10.0.0.2 »

Dans la seconde table T2 cela peut s'exprimer sous la forme :
- Serveur -> Email 10.0.0.1
   Email 10.0.0.2

Si cela s'avère nécessaire, on pourra effacer la méta-règle Serveur par la commande « metafirewall delete Serveur ».

Bien que cela ne soit pas une obligation, le premier module de configuration 9 peut être subdivisé en plusieurs sous-modules de configuration chargés chacun de l'activation et de la paramétrisation (paramètres auxiliaires) d'un ensemble distinct de méta-règles (primaires et/ou secondaires), de sorte qu'à réception de données primaires seul soit appelé le module qui leur est associé. Dans ce cas, chaque sous-module est agencé pour adresser une sous-partie du moteur 11, elle même couplée à une sous-partie de la première table T1. Des liens de dépendance peuvent exister entre modules. Dans ce cas l'appel d'un module implique qu'il appelle lui même les modules dont il dépend ou auxquels il est associé. Cela peut permettre de réduire encore plus le temps nécessaire au calcul d'une reconfiguration.

Le module de configuration 9 et le méta pare-feu 10 ont été décrits ci-avant sous la forme de deux modules couplés, mais séparés. Mais, ils pourraient ne faire qu'un unique module 8.

Par ailleurs, on a décrit un dispositif constituant à lui seul un pare-feu. Mais, le dispositif selon l'invention pourrait ne pas comporter le module pare-feu 5, celui-ci étant déjà implanté dans le serveur 2, sous forme native. Par conséquent, dans ce cas, le dispositif selon l'invention n'est constitué que du module de gestion 8, celui-ci devant alors être implanté dans le serveur 2 afin d'y être couplé au module pare-feu natif.

En outre, certains modules du dispositif 1, tels que le premier module de configuration 9 et le moteur 11, peuvent être réalisés sous la forme de module(s) logiciel(s) ("software"). Mais ils peuvent être également réalisés, au moins en partie, sous la forme de circuits électroniques ("hardware"), ou encore sous la forme de combinaisons de modules logiciels et de circuits électroniques. Ces modules logiciels peuvent être, par exemple, réalisés en langage java ou en langage C ou C++.

On peut également intégrer des fonctionnalités du méta pare-feu 10 (notamment le nommage de règles à travers les tables T1 et T2) dans un pare-feu classique 5.

L'invention offre également un procédé de traitement dynamique de données permettant d'appliquer à des données primaires reçues par un serveur informatique 12, des traitements spécifiques à partir de règles primaires, de sorte que les données primaires reçues soient traitées avant d'être transmises par ledit serveur.

Celui-ci peut être mis en oeuvre à l'aide du dispositif présenté ci-avant. Les fonctions et sous-fonctions principales et optionnelles assurées par les étapes de ce procédé étant sensiblement identiques à celles assurées par les différents moyens constituants le dispositif, seules seront résumées ci-après les étapes mettant en oeuvre les fonctions principales du procédé selon l'invention.

Ce procédé comporte une étape préliminaire dans laquelle on stocke dans une première table T1 des ensembles de règles primaires (dits « méta-règles primaires », constitués d'au moins une règle primaire), sous une forme paramétrable, en correspondance d'identifiants primaires, puis on sélectionne dans la première table T1 certains identifiants primaires et, à réception de données auxiliaires représentatives de paramètres de fonctionnement, délivrées par le serveur 2 consécutivement à la réception de données secondaires, on sélectionne dans la première table l'un au moins des identifiants primaires et on associe à cet identifiant primaire les données auxiliaires, de manière à définir les traitements spécifiques.

Par ailleurs, lors de l'étape préliminaire on peut stocker dans une seconde table T2 des identifiants secondaires en correspondance, chacun, d'au moins un identifiant primaire sélectionné associé à des données auxiliaires.

En outre, on peut paralléliser à la fois la sélection dans la première table T1 des méta-règles primaires, et la modification dans la seconde table T2 des données auxiliaires associées à l'identifiant secondaire représentatif des méta-règles primaires ou secondaires sélectionnées.

L'invention ne se limite pas aux modes de réalisation de dispositif et de procédé décrits ci-avant, seulement à titre d'exemple, mais elle englobe toutes les variantes que pourra envisager l'homme de l'art dans le cadre des revendications ci-après.

## Revendications

1. Dispositif de traitement de données (1), implantable dans un serveur informatique (2) agencé pour recevoir des données primaires et transmettre ces données primaires après application par des moyens de contrôle (5) de traitements spécifiques reposant sur des règles primaires, comprenant :
- i) une première table (T1) dans laquelle sont stockés des ensembles d'au moins une règle primaire, dits « méta-règles primaires», sous une forme paramétrable, en correspondance d'identifiants primaires,
- et ii) des moyens de gestion (8) destinés à être couplés auxdits moyens de contrôle (5) et agencés, à réception de données auxiliaires représentatives de paramètres de fonctionnement, délivrées par lesdits moyens de contrôle (5) consécutivement à la réception par le serveur (2) de données secondaires, pour sélectionner dans la première table (T1) l'un au moins des identifiants primaires et lui associer lesdites données auxiliaires, de manière à définir lesdits traitements spécifiques ;
**caractérisé en ce qu'**il comprend une seconde table (T2), accessible auxdits moyens de gestion (8), dans laquelle sont stockés des identifiants secondaires en correspondance, chacun, d'au moins un identifiant primaire sélectionné associé à des données auxiliaires,
et **en ce que** lesdits moyens de gestion (8) sont agencés, à réception desdites données auxiliaires, pour déterminer s'il leur correspond dans la seconde table (T2) des identifiants primaires sélectionnés, de manière à leur associer de nouvelles données auxiliaires destinées à adapter lesdits traitements spécifiques.

2. Dispositif selon la revendication 1, **caractérisé en ce que** certaines méta-règles primaires sélectionnées sont regroupées dans la seconde table (T2) en méta-règles secondaires représentées par des identifiants secondaires.

3. Dispositif selon la revendication 1, **caractérisé en ce que** lesdits moyens de gestion (8) i) comprennent une multiplicité de sous-modules de gestion agencés pour gérer chacun l'association de données auxiliaires à au moins une méta-règle primaire ou secondaire, et ii) à réception desdites données auxiliaires sont agencés pour déterminer parmi lesdits sous-modules de gestion celui qui leur correspond.

4. Dispositif selon la revendication 1, **caractérisé en ce que** lesdits moyens de gestion (8) sont agencés, à réception de certaines données complémentaires communiquées par le serveur (2), pour ajouter, supprimer ou modifier dans la seconde table (T2) des méta-règles primaires ou secondaires ou des données auxiliaires associées auxdites méta-règles primaires ou secondaires.

5. Dispositif selon la revendication 1, **caractérisé en ce que** lesdits moyens de gestion (8) et lesdites tables (T1 ,T2) font partie d'un méta pare-feu propre à gérer un pare-feu équipant ledit serveur (2).

6. Pare-feu, **caractérisé en ce qu'**il comprend un dispositif (1) selon l'une des revendications 1 à 5.

7. Procédé de traitement de données, consistant à appliquer à des données primaires reçues par un serveur informatique (2), des traitements spécifiques à partir de règles primaires, de sorte que les données primaires reçues soient traitées avant d'être transmises par ledit serveur, comprenant une étape préliminaire dans laquelle :
- i) on stocke dans une première table (T1) des ensembles d'au moins une règle primaire, dits « méta-règles primaires», sous une forme paramétrable, en correspondance d'identifiants primaires,
- et ii) à réception de données auxiliaires représentatives de paramètres de fonctionnement, délivrées par le serveur (2) consécutivement à la réception de données secondaires, on sélectionne dans la première table (T1) l'un au moins des identifiants primaires et on associe à cet identifiant primaire lesdites données auxiliaires, de manière à définir lesdits traitements spécifiques,
**caractérisé en ce qu'**à l'étape préliminaire on stocke dans une seconde table (T2) des identifiants secondaires en correspondance, chacun, d'au moins un identifiant primaire sélectionné associé à des données auxiliaires, et **en ce qu'**à réception des données auxiliaires, on détermine s'il leur correspond dans la seconde table (T2) des identifiants primaires sélectionnés, de manière à leur associer de nouvelles données auxiliaires destinées à adapter lesdits traitements spécifiques.

8. Procédé selon la revendication 7, **caractérisé en ce que** certaines méta-règles primaires sont regroupées dans la seconde table (T2) en méta-règles secondaires représentées par des identifiants secondaires.

9. Procédé selon la revendication 7, **caractérisé en ce qu'**on parallélise i) la sélection dans la première table (T1) des méta-règles primaires ou secondaires, et ii) la modification dans la seconde table (T2) des données auxiliaires associées à l'identifiant secondaire représentatif des méta-règles primaires ou secondaires sélectionnées.

10. Procédé selon la revendication 7, **caractérisé en ce qu'**à réception de données complémentaires communiquées par ledit serveur (2), on ajoute, supprime ou modifie dans la seconde table (T2) des méta-règles primaires ou secondaires.

## Claims

1. A data processing device (1), which may be installed in an information server (2) configured to receive primary data and transmit that primary data after applying specific processing control means (5) relying on primary rules, comprising:
- i) a first table (T1) in which sets of at least one primary rule, called "primary meta-rules" are stored in a configurable form, matched with primary identifiers,
- and ii) management means (8) intended to be coupled to said control means (5) and configured, upon receiving auxiliary data representative of operating parameters, delivered by said control means (5) subsequent to the receipt of secondary data by the server (2) to select within the first table (T1) at least one of the primary identifiers and to associate said auxiliary data with them, so as to define said special processing,
**characterized in that** it comprises a second table (T2), accessible to said management means (8), wherein are stored secondary identifiers each matched up with at least one selected primary identifier associated with auxiliary data,
and **in that** said management means (8) are configured, upon receiving said auxiliary data, to determine if within the second table (T2) they are matched with selected primary identifiers, so as to associate them with new auxiliary data intended to adapt said special processing.

2. A device according to claim 1, **characterized in that** certain selected primary meta-rules are included in the second table (T2) as secondary meta-rules represented by secondary identifiers.

3. A device according to claim 1, **characterized in that** said managements means (8) i) comprise a multiplicity of management submodules configured to each manage the association of auxiliary data with at least one primary or secondary meta-rule ii) upon receiving said auxiliary data, are configured to determine which of said management submodules corresponds to them.

4. A device according to claim 1, **characterized in that** said management means (8) are configured, upon receiving certain complementary data communicated by the server (2), to add, delete, or edit within the second table (T2) primary or secondary meta-rules or auxiliary data associated with said primary or secondary meta-rules.

5. A device according to claim 1, **characterized in that** said management means (8) and said table (T1, T2) are part of a meta-firewall capable of managing a firewall equipping said server (2).

6. A firewall, **characterized in that** it comprises a device (1) according to one of the claims 1 to 5.

7. A data processing method, consisting of applying to primary data received by an information server (2), special processing based on primary rules, so that the received primary data is processed before being transmitted by said server, comprising a preliminary step wherein:
- i) storing in a configurable form within a first table (T1) sets of at least one primary rule, called "primary meta-rules", matched up with primary identifiers,
- and ii) upon receiving auxiliary data representative of operating parameters, delivered by the server (2) subsequent to the receipt of secondary data, at least one of the primary identifiers is selected within the first table (T1) and that primary identifier is associated with said auxiliary data, so as to define said special processing.
**characterized in that** during the preliminary step, in a second table (T2) secondary identifiers are saved, each matched up with at least one selected primary identifier associated with auxiliary data, and **in that** upon the receipt of the auxiliary data, it is determined if within the second table (T2) they are matched with selected primary identifiers, so as to associate them with new auxiliary data intended to adapt said special processing.

8. A method according to claim 7, **characterized in that** certain selected primary meta-rules are included in the second table (T2) as secondary meta-rules represented by secondary identifiers.

9. A method according to claim 7, **characterized in that** i) the selection within the first table (T1) of primary or secondary meta-rules, and ii) the modification within the second table (T2) of auxiliary data associated with the secondary identifier representative of the selected primary or secondary meta-rules, are done in parallel.

10. A method according to claim 7, **characterized in that** upon receiving complementary data communicated by said server (2), primary or secondary meta-rules are added, deleted, or modified within the second table (T2).

## Patentansprüche

1. Datenverarbeitungsvorrichtung (1), welche in einen Computerserver (2) implantierbar und dazu ausgelegt ist, Primärdaten zu empfangen und diese Primärdaten nach Anwendung, anhand von Steuermitteln (5), von auf primären Regeln basierenden spezifischen Verarbeitungsvorgängen zu übertragen, umfassend:
- i) Eine erste Tabelle (T1), in welcher Gruppen von mindestens einer primären Regel, sogenannte "primäre Metaregeln", in einer parametrierbarer Form entsprechend primären Kennungen gespeichert werden,
- und ii) Verwaltungsmittel (8) welche für das Koppeln an die besagten Steuermittel (5) bestimmt und dazu ausgelegt sind, bei Empfang von Hilfsdaten, die für Betriebsparameter repräsentativ sind und von den besagten Steuermitteln (5) im Anschluss an den Empfang von Sekundärdaten am Server (2) ausgegeben werden, in der ersten Tabelle (T1) zumindest eine der primären Kennungen auszuwählen und dieser primären Kennung die besagten Hilfsdaten zuzuordnen, um die besagten spezifischen Verarbeitungsvorgänge zu definieren;
**dadurch gekennzeichnet, dass** sie eine zweite Tabelle (T2) umfasst, auf welche die besagten Verwaltungsmittel (8) zugreifen können und in welcher die sekundären Kennungen jeweils entsprechend zumindest einer ausgewählten und mit Hilfsdaten assoziierten primären Kennung gespeichert werden,
und dass die besagten Verwaltungsmittel (8) dazu ausgelegt sind, bei Empfang der besagten Hilfsdaten zu ermitteln, ob ihnen in der zweiten Tabelle (T2) ausgewählte primäre Kennungen entsprechen, um ihnen neue Hilfsdaten zuzuordnen, welche dazu bestimmt sind, die besagten spezifischen Verarbeitungsvorgänge anzupassen.

2. Vorrichtung nach Anspruch 1, **dadurch gekennzeichnet, dass** bestimmte ausgewählte primäre Metaregeln in der zweiten Tabelle (T2) in von sekundären Kennungen dargestellten sekundären Metaregeln zusammengefasst werden.

3. Vorrichtung nach Anspruch 1, **dadurch gekennzeichnet, dass** die besagten Verwaltungsmittel (8) i) eine Mehrzahl von Verwaltungs-Untermodulen umfassen, welche dazu ausgelegt sind, jeweils die Zuordnung von Hilfsdaten zu mindestens einer primären oder sekundären Metaregel zu verwalten, und ii) bei Empfang der besagten Hilfsdaten dazu ausgelegt sind, unter den besagten Verwaltungs-Untermodulen dasjenige zu bestimmen, welches ihnen entspricht.

4. Vorrichtung nach Anspruch 1, **dadurch gekennzeichnet, dass** die besagten Verwaltungsmittel (8) dazu ausgelegt sind, bei Empfang bestimmter von dem Server (2) übermittelten zusätzlichen Daten, primäre oder sekundäre Metaregeln oder den besagten primären oder sekundären Metaregeln zugeordnete Hilfsdaten in der zweiten Tabelle (T2) hinzuzufügen, zu löschen oder zu ändern.

5. Vorrichtung nach Anspruch 1, **dadurch gekennzeichnet, dass** die besagten Verwaltungsmittel (8) und die besagten Tabellen (T1, T2) Teil einer Meta-Firewall sind, welche für die Verwaltung einer den besagten Server (2) ausstattenden Firewall geeignet ist.

6. Firewall, **dadurch gekennzeichnet, dass** sie eine Vorrichtung (1) gemäß einem der Ansprüche 1 bis 5 umfasst.

7. Datenverarbeitungsverfahren, welches darin besteht, auf von einem Computerserver (2) empfangenen Primärdaten spezifische Verarbeitungsvorgänge auf der Basis von primären Regeln anzuwenden, so dass die empfangenen Primärdaten verarbeitet werden, bevor sie von dem besagten Server übertragen werden, wobei das Verfahren einen einleitenden Schritt umfasst, in welchem:
- i) Man in einer ersten Tabelle (T1) Gruppen von mindestens einer primären Regel, sogenannte "primäre Metaregeln", in einer parametrierbarer Form entsprechend primären Kennungen speichert,
- und ii) man bei Empfang Hilfsdaten, welche für Betriebsparameter repräsentativ sind und von dem Server (2) im Anschluss an den Empfang von Sekundärdaten ausgegeben werden, in der ersten Tabelle (T1) zumindest eine der primären Kennungen auswählt und dieser primären Kennung die besagten Hilfsdaten zuordnet, um die besagten spezifischen Verarbeitungsvorgänge zu definieren;
**dadurch gekennzeichnet, dass** man in dem einleitenden Schritt sekundäre Kennungen jeweils entsprechend zumindest einer ausgewählten und mit Hilfsdaten assoziierten primären Kennung in en einer zweiten Tabelle (T2) speichert,
und dass man bei Empfang der Hilfsdaten ermittelt, ob ihnen in der zweiten Tabelle (T2) ausgewählte primäre Kennungen entsprechen, um ihnen neue Hilfsdaten zuzuordnen, welche dazu bestimmt sind, die besagten spezifischen Verarbeitungsvorgänge anzupassen.

8. Verfahren nach Anspruch 7, **dadurch gekennzeichnet, dass** bestimmte primäre Metaregeln in der zweiten Tabelle (T2) in von sekundären Kennungen dargestellten sekundären Metaregeln zusammengefasst werden.

9. Verfahren nach Anspruch 7, **dadurch gekennzeichnet, dass** man i) die Auswahl der primären oder sekundären Metaregeln in der ersten Tabelle (T1) und ii) die Änderung, in der zweiten Tabelle (T2), der Hilfsdaten, welche der sekundären Kennung, die für die ausgewählten primären oder sekundären Metaregeln repräsentativ ist, zugeordnet sind, parallelisiert.

10. Verfahren nach Anspruch 7, **dadurch gekennzeichnet, dass** man bei Empfang von durch den besagten Server (2) übermittelten zusätzlichen Daten primäre oder sekundäre Metaregeln in der zweiten Tabelle (T2) hinzufügt, löscht oder ändert.
